Europäisches Patentamt

European Patent Office

Office européen des brevets

(11) Numéro de publication: **0 532 374 B1**

(12) **FASCICULE DE BREVET EUROPEEN**

(45) Date de publication de fascicule du brevet: **26.10.94**  (51) Int. Cl.5: **F02C  9/28**

(21) Numéro de dépôt: **92402227.0**

(22) Date de dépôt: **04.08.92**

(54) **Dispositif pour la commande du régime des moteurs d'un aéronef.**

(30) Priorité: **12.08.91 FR 9110237**

(43) Date de publication de la demande:
**17.03.93 Bulletin  93/11**

(45) Mention de la délivrance du brevet:
**26.10.94 Bulletin  94/43**

(84) Etats contractants désignés:
**DE GB NL**

(56) Documents cités:
**EP-A- 0 277 904      EP-A- 0 401 152**
**WO-A-82/00687        GB-A- 2 079 988**
**GB-A- 2 134 285      GB-A- 2 217 477**
**GB-A- 2 228 977**

(73) Titulaire: **AEROSPATIALE SOCIETE NATIONA-
LE INDUSTRIELLE
37, Boulevard de Montmorency
F-75016 Paris (FR)**

(72) Inventeur: **Bissey, Bernard
1, Rue Alphonse Daudet
F-31700 Blagnac (FR)**
Inventeur: **Maffre, Claude
2, Rue La Goutille
F-31880 La Salvetat St Gilles (FR)**

(74) Mandataire: **Bonnetat, Christian
CABINET BONNETAT
23, Rue de St.Pétersbourg
F-75008 Paris (FR)**

Rank Xerox (UK) Business Services
(3.10/3.09/3.3.3)

## Description

La présente invention concerne un dispositif pour la commande du régime des moteurs d'un aéronef.

On sait que la commande des moteurs (ou réacteurs) d'un aéronef peut être réalisée manuellement ou automatiquement, selon les circonstances. En simplifiant, on peut décrire la commande d'un moteur de la façon suivante. Dans le premier cas, le pilote déplace à la main une manette de gaz dont les changements de position se traduisent par des variations de la puissance (poussée) fournie par le moteur. Dans le second cas, c'est un automate qui agit sur les réglages du moteur à la place de la main du pilote, conformément aux instructions du pilote reçues par l'automate. Cet automate agit, suivant le cas :

- grâce à son servomoteur, directement sur la manette de gaz que le pilote voit donc se déplacer sans y toucher ; la manette de gaz peut être reliée mécaniquement au régulateur de l'alimentation en carburant du moteur correspondant, ou elle peut être reliée à un capteur électrique de position qui fournit des informations au calculateur de commande du moteur ;
- directement sur le calculateur de commande du moteur, sans effet sur le déplacement de la manette, comme dans le brevet FR-2 580 034.

Les inconvénients des solutions évoquées ci-dessus sont les suivants :

- dans le cas de l'automate agissant sur les manettes, les performances sont tributaires des imperfections de tous les éléments mécaniques impliqués dans la commande du régime des moteurs (seuil, hystérésis, inertie, notamment) ; par ailleurs, il est difficile d'égaliser le régime de tous les moteurs ;
- dans le cas de l'automate agissant sans déplacement des manettes, la position des manettes ne représente pas le régime moteur commandé par le dispositif.

La présente invention a pour but d'éviter ces inconvénients.

A cet effet, le dispositif pour la commande du régime d'un moteur d'aéronef, ledit aéronef comportant un dispositif de contrôle, et pouvant être manoeuvré par un pilote, comprend :

- une manette de gaz reliée, d'une part, à un capteur de la position de celle-ci et, d'autre part, à un servomoteur pourvu d'une commande, par l'intermédiaire d'une transmission mécanique,
- ledit dispositif de contrôle, permettant au pilote de choisir le mode de vol, étant relié, d'une part, à un premier calculateur destiné à calculer le régime du moteur à atteindre $X$ $OBJ$ et, d'autre part, à des moyens de commutation à deux positions, correspondant l'une à la commande manuelle et l'autre à la commande automatique, et comportant deux entrées "manuel" et "automatique",
- ledit premier calculateur recevant de plus des informations relatives à des paramètres externes au moteur, et délivrant un premier signal représentatif du régime du moteur à atteindre $X$ $OBJ$, à l'entrée d'un deuxième calculateur, comparant ledit régime à atteindre $X$ $OBJ$ et le régime limite du moteur $X$ $LIM$, et délivrant, à sa sortie, un deuxième signal représentatif du régime de consigne du moteur $X$ $CONS$, tel que :

  1) si $X$ $OBJ$ < $X$ $LIM$ alors $X$ $CONS$ = $X$ $OBJ$, et

  2) si $X$ $OBJ$ $\geq$ $X$ $LIM$ alors $X$ $CONS$ = $X$ $LIM$,

- ledit capteur de position étant relié à l'entrée d'un troisième calculateur, fournissant à sa sortie un troisième signal représentatif du régime du moteur correspondant à la position de la manette $X(TLA)$, et relié à l'entrée "manuel" desdits moyens de commutation,
- lesdits deuxième et troisième signaux étant fournis aux entrées d'un comparateur dont la sortie est reliée à la commande du servomoteur, et
- le deuxième calculateur étant relié à l'entrée "automatique" desdits moyens de commutation,
- la transmission mécanique entre le servomoteur et la manette comportant un couplage surpassable par l'action volontaire de la main du pilote sur la manette,
- le deuxième calculateur étant relié aux moyens de commutation par l'intermédiaire d'un quatrième calculateur relié, de plus, au troisième calculateur et fournissant, à partir des deuxième et troisième signaux, un quatrième signal représentatif du régime commandé du moteur $X$ $COM$, tel que :

  a) si la relation

$$X(TLA) - \Delta \leq X\ CONS \leq X\ (TLA) + \Delta \qquad (1)$$

  (où $\Delta$ représente un écart de valeur ou tolérance déterminé) est vérifiée, alors $X$ $COM$ = $X$ $CONS$, et

  b) si la relation (1) n'est pas vérifiée, alors

  $X$ $COM$ = $X(TLA) - \Delta$ si $X$ $CONS$ < $X(TLA) - \Delta$ , et

  $X$ $COM$ = $X(TLA) + \Delta$ si $X$ $CONS$ > $X(TLA) + \Delta$.

Ainsi, grâce au dispositif de commande précédemment défini, la position des manettes représente toujours le régime moteur commandé par le dispositif. Par ailleurs, les performances sont indépendantes des imperfections des éléments mécaniques impliqués dans la commande du régime moteur, et le surpassement du dispositif est possible par déplacement de la manette, tandis que le régime moteur n'excède pas le régime limite correspondant à la phase de vol considérée.

Avantageusement, la transmission mécanique entre le servomoteur et la manette comporte un couplage par friction, associé à un embrayage électromagnétique.

De plus, le dispositif peut comprendre un calculateur auxiliaire du régime limite du moteur X LIM et/ou un dispositif de traitement des informations relatives à des paramètres externes et, éventuellement, internes au moteur, dispositif relié audit premier calculateur.

La présente invention concerne également un dispositif pour la commande du régime des moteurs d'un aéronef, ledit aéronef comportant une pluralité de moteurs et un dispositif de contrôle, et pouvant être manoeuvré par un pilote, du type comprenant :

- une pluralité de manettes de gaz, chaque manette étant associée à un moteur et reliée, d'une part, à un capteur de la position de celle-ci et, d'autre part, à un servomoteur pourvu d'une commande, par l'intermédiaire d'une transmission mécanique,

- ledit dispositif de contrôle, permettant au pilote de choisir le mode de vol, étant relié, d'une part, à un premier calculateur destiné à calculer le régime des moteurs à atteindre X OBJ et, d'autre part, pour chaque moteur, à des moyens de commutation à deux positions, correspondant l'une à la commande manuelle et l'autre à la commande automatique, et comportant deux entrées "manuel" et "automatique",

- ledit premier calculateur recevant de plus des informations relatives à des paramètres externes aux moteurs, et délivrant un premier signal représentatif du régime des moteurs à atteindre X OBJ, à l'entrée de deuxièmes calculateurs, chaque deuxième calculateur étant associé à un moteur et comparant ledit régime à atteindre X OBJ et le régime limite du moteur respectif X LIM, et délivrant, à sa sortie, un deuxième signal représentatif du régime de consigne du moteur respectif X CONS, tel que :
  1) si X OBJ < X LIM alors X CONS = X OBJ, et
  2) si X OBJ ≧ X LIM alors X CONS = X LIM,

- lesdits capteurs de position étant reliés à l'entrée de troisièmes calculateurs, chaque troisième calculateur étant associé à un moteur et fournissant à sa sortie un troisième signal représentatif du régime du moteur respectif correspondant à la position de la manette associée audit moteur X(TLA), et étant relié à l'entrée "manuel" desdits moyens de commutation,

- lesdits deuxièmes et troisièmes signaux étant fournis aux entrées de comparateurs associés, chacun, à un moteur et dont la sortie de chacun est reliée à la commande du servomoteur, et

- chaque deuxième calculateur étant relié à l'entrée "automatique" desdits moyens de commutation,

- toutes les manettes de gaz étant commandées par un servomoteur unique pourvu d'une commande unique, reliée à la sortie desdits comparateurs par l'intermédiaire d'une logique permettant de choisir une valeur déterminée parmi la pluralité de valeurs issues desdits comparateurs,

- la transmission mécanique entre le servomoteur et chaque manette comportant un couplage surpassable par l'action volontaire de la main du pilote sur la manette,

- chaque deuxième calculateur étant relié aux moyens de commutation par l'intermédiaire d'un quatrième calculateur relié, de plus, au troisième calculateur et fournissant, à partir des deuxième et troisième signaux, un quatrième signal représentatif du régime commandé du moteur respectif X COM tel que :
  a) si la relation

$$X(TLA) - \Delta \leq X\ CONS \leq X(TLA) + \Delta \qquad (1)$$

(où $\Delta$ représente un écart de valeur ou tolérance déterminé) est vérifiée, alors X COM = X CONS, et
  b) si la relation (1) n'est pas vérifiée, alors

$$X\ COM = X(TLA) - \Delta \text{ si } X\ CONS < X(TLA) - \Delta\ , \text{ et}$$
$$X\ COM = X(TLA) + \Delta \text{ si } X\ CONS > X(TLA) + \Delta.$$

Dans ce cas d'une pluralité de moteurs, les avantages précédemment cités sont conservés, et, par ailleurs, les régimes des moteurs sont identiques et, cela, malgré un désalignement éventuel des manettes, inférieur à une valeur donnée.

En particulier, la logique peut choisir la plus petite valeur ou la plus grande valeur parmi la pluralité des valeurs issues desdits comparateurs.

Avantageusement, des moyens de commutation, commandables par le dispositif de contrôle, permettent de passer du choix de la plus petite valeur à celui de la plus grande, et inversement.

De préférence, la transmission mécanique entre le servomoteur et chaque manette comporte un couplage par friction, associé à un embrayage électromagnétique.

Par ailleurs, le dispositif de commande de l'invention peut comprendre un calculateur auxiliaire du régime limite de chaque moteur et/ou un dispositif de traitement des informations relatives à des paramètres externes et, éventuellement, internes à chaque moteur, dispositif relié audit premier calculateur.

Les figures du dessin annexé feront bien comprendre comment l'invention peut être réalisée. Sur ces figures, des références identiques désignent des éléments semblables, et le paramètre général X caractérisant le régime moteur prend la forme particulière du paramètre NI préféré par certains constructeurs de moteurs.

La figure 1 illustre schématiquement un exemple de réalisation du dispositif conforme à l'invention, pour la commande du régime d'un moteur d'aéronef.

La figure 2 montre un dispositif conforme à l'invention pour la commande du régime des n moteurs d'un aéronef.

Les figures 3a,b, 4a,b, 5a,b et 6a,b illustrent plusieurs exemples de mise en oeuvre du dispositif de la figure 2.

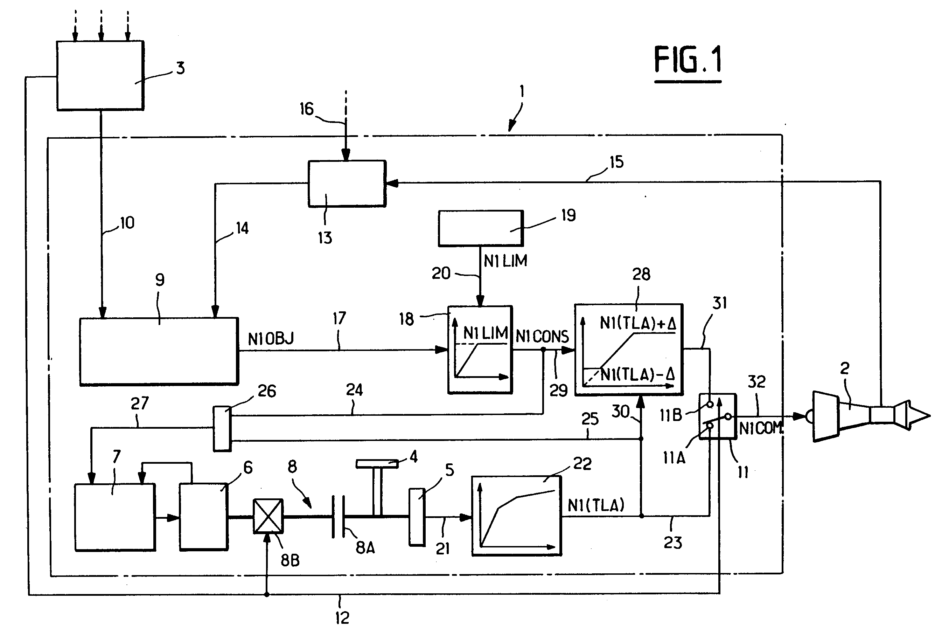

Comme le montre la figure 1, le dispositif 1 pour la commande du régime d'un moteur 2 d'aéronef, ce dernier (non représenté) comportant un dispositif de contrôle 3 et pouvant être manoeuvré par un pilote, comprend une manette de gaz 4 reliée, d'une part, à un capteur 5 de la position de celle-ci et, d'autre part, à un servomoteur 6 pourvu d'une commande 7, par l'intermédiaire d'une transmission mécanique 8.

Par ailleurs, le dispositif de contrôle 3, permettant notamment au pilote de choisir le mode de vol (c'est-à-dire à vitesse constante, à nombre de Mach constant ou à poussée constante, notamment), est relié, d'une part, à un premier calculateur 9 par une liaison 10, ledit calculateur étant destiné à calculer le régime du moteur à atteindre (ou régime "objectif") N1 OBJ, et, d'autre part, à un commutateur 11 par une liaison 12, ledit commutateur 11 pouvant présenter deux positions, correspondant l'une à la commande manuelle et l'autre à la commande automatique, et comportant pour cela une entrée "manuel" 11A et une entrée "automatique" 11B. Dans la description de cet exemple de réalisation, on a choisi comme paramètre caractéristique de la conduite du régime des moteurs, la vitesse du rotor N1. Cela n'est pas, bien entendu, limitatif, et on pourrait tout aussi bien utiliser un autre paramètre (désigné précédemment par "X"), comme la vitesse d'un rotor différent, le rapport de deux pressions de flux, par exemple.

De plus, le premier calculateur 9 peut recevoir d'un dispositif de traitement 13, par une liaison 14, des informations relatives à des paramètres internes (liaison 15) et, essentiellement, externes (liaison 16) au moteur 2. Ces paramètres, provenant d'une pluralité de capteurs (non représentés) peuvent être aussi bien des paramètres internes au moteur (températures, pressions, vitesse de rotation du ou des rotors, etc ...), que des paramètres concernant l'environnement de l'aéronef (températures, pressions, altitude, vitesse de l'air environnant, vitesse relative de l'aéronef par rapport à l'air, accélération de l'aéronef, etc ...). Par ailleurs, le premier calculateur 9 délivre, par une liaison 17, un premier signal représentatif du régime du moteur à atteindre N1 OBJ, à l'entrée d'un deuxième calculateur 18, comparant ledit régime à atteindre N1 OBJ et le régime limite du moteur N1 LIM, provenant d'un calculateur auxiliaire 19 par la liaison 20. Le deuxième calculateur 18 délivre, à sa sortie, un deuxième signal représentatif du régime de consigne du moteur N1 CONS, tel que :

1) si N1 OBJ < N1 LIM alors N1 CONS = N1 OBJ, et

2) si N1 OBJ ≥ N1 LIM alors N1 CONS = N1 LIM.

En outre, le capteur de position 5 est relié, par la liaison 21, à l'entrée d'un troisième calculateur 22, fournissant, à sa sortie, un troisième signal représentatif du régime du moteur correspondant à la position de la manette N1(TLA), et relié, par la liaison 23, à l'entrée "manuel" 11A du commutateur 11.

Comme on le voit encore sur la figure 1, les deuxième et troisième signaux sont fournis, par les liaisons respectives 24 et 25, aux entrées d'un comparateur 26 dont la sortie est reliée à la commande 7 du servomoteur 6, par la liaison 27, et fournissant, comme signal, la différence des deuxième et troisième signaux.

Plus particulièrement, selon l'invention, la transmission mécanique 8 entre le servomoteur 6 et la manette 4 comporte un couplage surpassable par l'action volontaire de la main du pilote sur la manette 4, par exemple un couplage par friction 8A, associé à un embrayage électromagnétique 8B (lequel est relié au dispositif de contrôle 3 par la liaison 12), et le deuxième calculateur 18 est relié au commutateur 11 (et cela par une liaison 29) par l'intermédiaire d'un quatrième calculateur 28, relié, de plus, au troisième calculateur 22 par la liaison 30 et fournissant, à partir des deuxième et troisième signaux, un quatrième signal représentatif du régime commandé du moteur N1 COM, tel que :

a) si la relation

$$N1(TLA) - \Delta \leq N1\ CONS \leq N1\ (TLA) + \Delta \quad (1)$$

(où $\Delta$ représente un écart de valeur ou tolérance déterminé) est vérifiée, alors N1 COM = N1 CONS, et

b) si la relation (1) n'est pas vérifiée, alors

$$N1\ COM = N1(TLA) - \Delta \text{ si } N1\ CONS < N1\text{-}(TLA) - \Delta, \text{ et}$$
$$N1\ COM = N1(TLA) + \Delta \text{ si } N1\ CONS > N1\text{-}(TLA) + \Delta.$$

La sortie du quatrième calculateur 28 est reliée, par la liaison 31, à l'entrée "automatique" 11B du commutateur 11, dont la sortie est reliée au moteur 2 par la liaison 32, et par l'intermédiaire d'une interface appropriée.

Le fonctionnement du dispositif qui vient d'être décrit est le suivant.

Dans le cas où le contrôle du moteur est commandée manuellement (commutateur 11 dans la position "manuel" 11A), la manette de gaz 4 est découplée du servomoteur 6 (l'embrayage électromagnétique 8B étant non excité), et le régime du moteur 2 est directement fonction de la position de la manette 4 au travers du calculateur 22 établissant la relation :

$$N1\ COM = N1(TLA)$$

dans laquelle, comme déjà indiqué :
- N1 COM est le régime moteur commandé, et
- N1(TLA) est le régime moteur calculé en fonction de la position angulaire de la manette.

En fonctionnement automatique, la manette de gaz 4 est solidaire du servomoteur 6 par l'intermédiaire :
- de l'embrayage électromagnétique 8B, excité lorsque le dispositif automatique de commande des gaz est actif (commutateur 11 dans la position "automatique" 11B), et
- de l'élément de couplage par friction 8A, surpassable quand le pilote exerce un effort sur la manette.

En fonction des consignes affichées par le pilote, et de paramètres externes et, éventuellement, internes au moteur, le calculateur 9 calcule le régime moteur à atteindre (régime moteur "objectif") N1 OBJ. Par ailleurs, le calculateur 19 calcule en fonction de la phase de vol, à partir de la vitesse de vol, de la température ambiante, etc ..., un régime maximum autorisé pour le moteur : N1 limite (N1 LIM).

Le régime N1 OBJ est transmis au calculateur 18, en même temps que le régime N1 LIM, calculateur qui fournit, à sa sortie, la plus basse des deux valeurs N1 OBJ et N1 LIM qui devient N1 consigne (N1 CONS) utilisable pour la commande du moteur.

En d'autres termes,
si N1 OBJ < N1 LIM alors N1 CONS = N1 OBJ, et
si N1 OBJ $\geq$ N1 LIM alors N1 CONS = N1 LIM.

L'ordre N1 CONS constitue l'entrée d'un asservissement dont le but est de commander le déplacement de la manette par le servomoteur de façon que le régime moteur correspondant à la position de la manette N1(TLA) soit égal à N1 CONS. Cet asservissement peut être par exemple un asservissement en vitesse du servomoteur.

Si le pilote exerce un effort sur la manette de gaz, il la déplace, et N1(TLA) devient alors différent de N1 CONS, ce qui présente les conséquences examinées par la suite. On notera, toutefois, que, dans ce cas de surpassement de l'automatisme, le servomoteur continuera de tourner tant que durera l'action du pilote sur la manette de gaz, mais que, dès que cette action cessera, la manette sera ramenée dans la position correspondant à N1 CONS.

Par ailleurs, le calculateur 28 recevant l'information N1(TLA), qui est toujours calculée quelles que soient les circonstances, calcule les valeurs limites :

(supérieure) N1(TLA) + $\Delta$
(inférieure) N1(TLA) - $\Delta$

($\Delta$ représentant un écart de valeur prédéterminé ou tolérance).

Le calculateur 28, recevant en outre du calculateur 18 le signal N1 CONS, établit la relation :

$$N1(TLA) - \Delta \leq N1\ CONS \leq N1(TLA) + \Delta \quad (1).$$

Si la relation (1) est vérifiée, le calculateur 28 transmet au moteur 2 le signal N1 CONS et, dans ce cas :

$$N1\ COM = N1\ CONS.$$

En revanche, si la relation (1) n'est pas vérifiée, le calculateur 28 ne tient plus compte de N1 CONS et fixe :

$$N1\ COM = N1(TLA) - \Delta \text{ si } N1\ CONS < N1(TLA) - \Delta$$
$$N1\ COM = N1(TLA) + \Delta \text{ si } N1\ CONS > N1(TLA) + \Delta$$

Le dispositif de commande décrit présente les avantages suivants :

a) la position de la manette représente le régime moteur commandé (à une tolérance près égale à $\Delta$). Donc, en dehors d'une panne ou d'un surpassement de l'automatisme par application d'un effort sur la manette de gaz :

N1(TLA) = N1 CONS (asservissement)

ce qui entraîne:

N1(TLA) - $\Delta$ $\leq$ N1 CONS $\leq$ N1(TLA) + $\Delta$

et donc :

N1 COM = N1 CONS

Par conséquent :

N1(TLA) = N1 COM

b) le surpassement de l'automatisme est possible par déplacement de la manette.

Dans le cas de surpassement de l'automatisme, le pilote exerce un effort sur la manette et déplace celle-ci, malgré la réaction du servomoteur, grâce au couplage par friction.

A ce moment là :

N1(TLA) $\neq$ N1 CONS

et l'action du calculateur 28 entraîne l'établissement de l'une des deux relations suivantes (déjà formulées plus haut) :

N1 COM = N1(TLA) - $\Delta$ si N1 CONS < N1(TLA) - $\Delta$
N1 COM = N1(TLA) + $\Delta$ si N1 CONS > N1(TLA) + $\Delta$

c) Le régime moteur commandé par l'automatisme n'excède pas le régime maximum autorisé pour le moteur :

N1 COM $\leq$ N1 LIM.

Par ailleurs, les imperfections mécaniques (frottement, jeu, hystérésis) liées à la commande de la manette n'ont aucun effet sur les performances de la commande automatique du moteur, tout au moins dans la mesure où les écarts de régime moteur liés à ces imperfections sont inférieurs à $\Delta$.

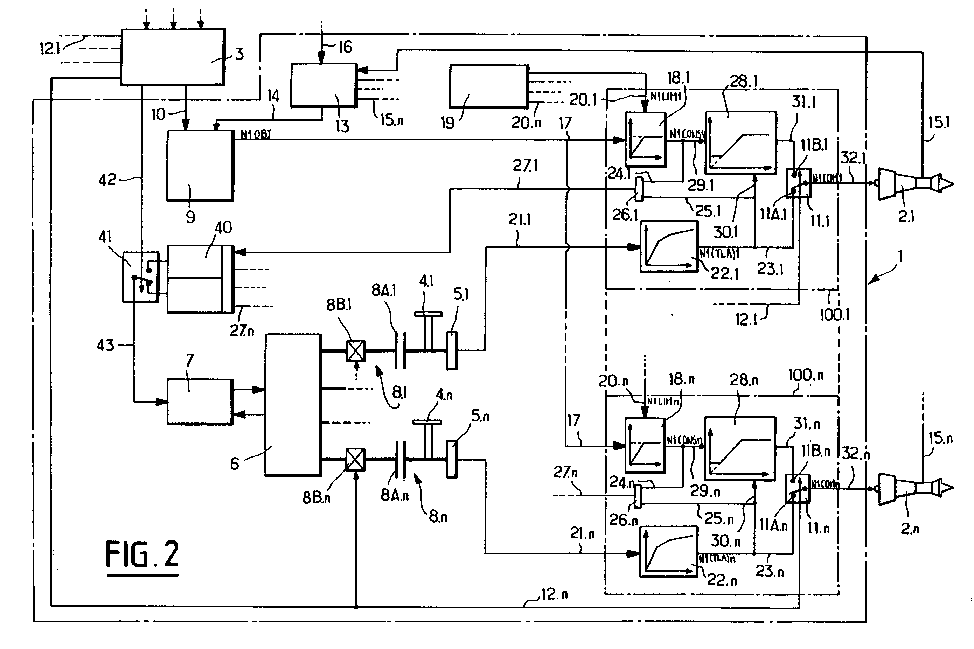

La figure 2 montre un dispositif 1 pour la commande du régime des moteurs d'un aéronef comportant une pluralité de moteurs 2.1, ..., 2.n. Il va de soi que $\underline{n}$ est un entier qui peut être égal à 2, 3, 4 ou plus.

A chaque moteur 2.1, ..., 2.n, est associée une manette de gaz respective 4.1, ..., 4.n reliée, d'une part, à un capteur 5.1, ..., 5.n de la position de celle-ci et, d'autre part, par l'intermédiaire d'une transmission mécanique 8.1, ..., 8.n, à un servomoteur 6, commun à toutes les manettes, pourvu d'une commande 7 elle-même unique. Chaque transmission mécanique 8.1, ..., 8.n comporte, comme dans le cas de la figure 1, un couplage surpassable par l'action volontaire de la main du pilote sur la manette correspondante, par exemple un couplage à friction 8A.1, ..., 8A.n associé à un embrayage électromagnétique 8B.1, ..., 8B.n.

Comme précédemment, un dispositif de contrôle 3, permettant au pilote de choisir le mode de vol, est relié, d'une part, à un premier calculateur 9 (par la liaison 10) destiné à calculer le régime des moteurs à atteindre N1 OBJ et, d'autre part, par des liaisons 12.1, ..., 12.n à des commutateurs 11.1, ..., 11.n (un tel commutateur étant prévu pour chaque moteur) à deux positions, correspondant l'une à la commande manuelle et l'autre à la commande automatique, et comportant deux entrées "manuel" 11A.1, ..., 11A.n et "automatique" 11B.1, ..., 11B.n.

Le premier calculateur 9 reçoit, de plus, du dispositif de traitement 13, par une liaison 14, des informations relatives à des paramètres internes (liaisons 15.1, ..., 15.n) et, essentiellement, externes (liaison 16) aux moteurs 2.1, ..., 2.n. Par ailleurs, le premier calculateur 9, par la liaison 17, délivre, aux unités de calcul 100.1, ..., 100.n identiques et associées, chacune, à un moteur 2.1, ..., 2.n, un premier signal représentatif du régime des moteurs à atteindre N1 OBJ, à l'entrée de deuxièmes calculateurs 18.1, ..., 18.n associés, respectivement, à chaque unité de calcul 100.1, ..., 100.n et comparant le régime à atteindre et le régime limite du moteur correspondant N1 LIM provenant du calculateur auxiliaire 19 par les liaisons respectives 20.1, ..., 20.n. Chaque deuxième calculateur 18.1, ..., 18.n délivre, à sa sortie, un deuxième signal représentatif du régime de consigne du moteur correspondant N1 CONS, tel que :

1) si N1 OBJ < N1 LIM alors N1 CONS = N1 OBJ, et

2) si N1 OBJ $\geq$ N1 LIM alors N1 CONS = N1 LIM.

En outre, chaque capteur de position 5.1, ..., 5.n est relié, par la liaison 21.1, ..., 21.n, à l'entrée d'un troisième calculateur 22.1, ..., 22.n (appartenant à l'unité de calcul respective 100.1, ..., 100.n), fournissant, à sa sortie, un troisième signal représentatif du régime du moteur considéré correspondant à la position de la manette respective N1(TLA), et relié, par la liaison 23.1, ..., 23.n, à l'entrée "manuel" 11A.1, ..., 11A.n du commutateur 11.1, ..., 11.n.

Dans chaque unité de calcul 100.1, ..., 100.n, les deuxième et troisième signaux sont fournis, par les liaisons respectives 24.1, ..., 24.n et 25.1, ..., 25.n, aux entrées d'un comparateur 26.1, ..., 26.n dont la sortie est reliée, par la liaison 27.1, ..., 27.n, à une logique 40 permettant de choisir, parmi la pluralité de valeurs issues des comparateurs 26.1, ..., 26.n (différence des deuxième et troisième signaux), la plus petite valeur ou la plus grande valeur. Un commutateur 41, commandable par le dispositif de contrôle 3 (liaison 42), permet de passer du choix de la plus petite valeur à celui de la plus grande, et inversement. La sortie du commutateur 41 est reliée à la commande 7 du servomoteur 6 par une liaison 43.

Par ailleurs, dans chaque unité de calcul 100.1, ..., 100.n, le deuxième calculateur 18.1, ..., 18.n est relié au commutateur 11.1, ..., 11.n par l'intermédiaire d'un quatrième calculateur 28.1, ..., 28.n (et cela par une liaison 29.1, ..., 29.n) relié, de plus, au troisième calculateur 22.1, ..., 22.n par la liaison 30.1, ..., 30.n et fournissant, à partir des deuxième et troisième signaux, un quatrième signal représentatif du régime commandé du moteur correspondant N1 COM, tel que :
a) si la relation

$$N1(TLA) - \Delta \leq N1\ CONS \leq N1\ (TLA) + \Delta \quad - \quad (1)$$

(où $\Delta$ représente un écart de valeur ou tolérance déterminé) est vérifiée, alors N1 COM = N1 CONS, et
b) si la relation (1) n'est pas vérifiée, alors

$$N1\ COM = N1(TLA) - \Delta \text{ si } N1\ CONS < N1\text{-}(TLA) - \Delta \text{ , et}$$
$$N1\ COM = N1(TLA) + \Delta \text{ si } N1\ CONS > N1\text{-}(TLA) + \Delta.$$

La sortie du quatrième calculateur 28.1, ..., 28.n est reliée, par la liaison 31.1, ..., 31.n, à l'entrée "automatique" 11B.1, ..., 11B.n du commutateur 11.1, ..., 11.n, dont la sortie est reliée au moteur respectif 2.1, ..., 2.n par la liaison 32.1, ..., 32.n, et par l'intermédiaire d'une interface appropriée.

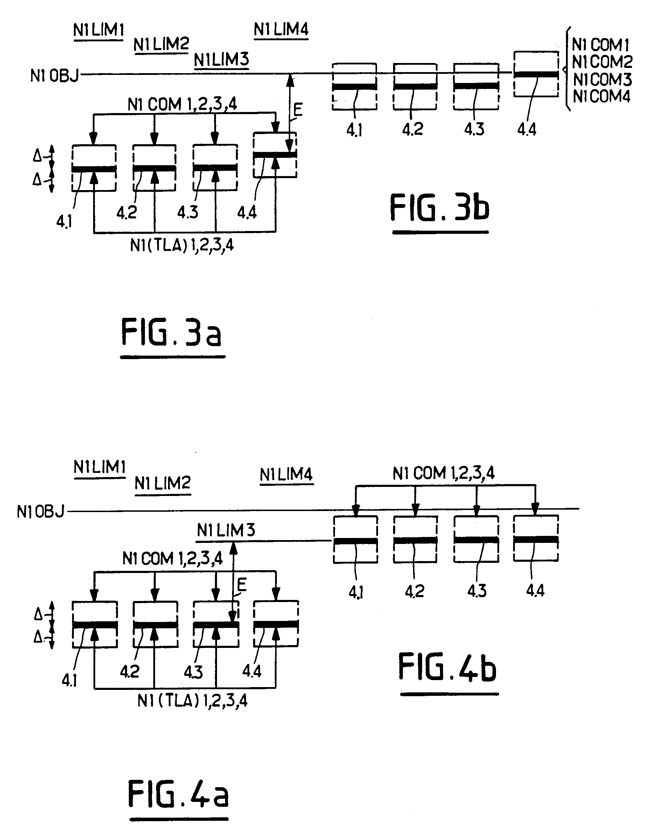

Les exemples suivants illustrent le fonctionnement du dispositif de la figure 2. On notera que, sur les figures 3a,3b, 4a,4b, 5a,5b et 6a,6b, pour des raisons de clarté de l'explication, on a confondu les positions des manettes 4.1, 4.2, 4.3 et 4.4 et les régimes N1(TLA)1,2,3,4 correspondants.

Logique 1 : choix de la plus petite valeur.

Ce choix correspond à la majorité des cas d'utilisation. Les trois exemples, illustrés par les figures 3a,3b, 4a,4b et 5a,5b, montrent, compte tenu des dispersions des régimes limites et des positions des manettes, le fonctionnement de cette logique de choix et indiquent la valeur N1 COM du régime commandé à chaque moteur. Dans ces exemples, pour des raisons de clarté et de simplification, on s'est limité au cas d'un aéronef comportant quatre moteurs.

Exemple 1 (figures 3a et 3b)

Sur la figure 3a, on a représenté la position des manettes 4.1, 4.2, 4.3, 4.4 avant réaction du servomoteur, correspondant, chacune, à un régime N1(TLA)1,2,3,4, et, sur la figure 3b, après réaction du servomoteur. Comme on le voit sur la figure 3a, les manettes sont initialement légèrement décalées, et le régime N1 OBJ avant réaction du servomoteur est tel que ce régime est inférieur au régime limite de chaque moteur. L'écart E considéré par la logique est alors celui de plus petite valeur (N1 OBJ - N1(TLA)4) correspondant à la manette 4.4. Après réaction du servomoteur (figure 3b), et à condition que les décalages entre N1(TLA)1,2,3,4 soient inférieurs à $\Delta$, le régime commandé à chaque moteur est le même et égal à N1 OBJ.

Exemple 2 (figures 4a et 4b)

Les manettes 4.1, 4.2, 4.3, 4.4 sont initialement alignées (figure 4a), et le régime N1 OBJ, avant réaction du servomoteur, dépasse le régime limite du troisième moteur. L'écart E considéré par la logique sera alors celui entre N1 LIM3 et N1(TLA)3, et, après réaction du servomoteur (figure 4b), les manettes 4.1, 4.2, 4.3, 4.4 seront alignées sur N1 LIM3. Aucun moteur ne sera en surrégime, et la différence entre les régimes commandés sera au plus égale à $\Delta$.

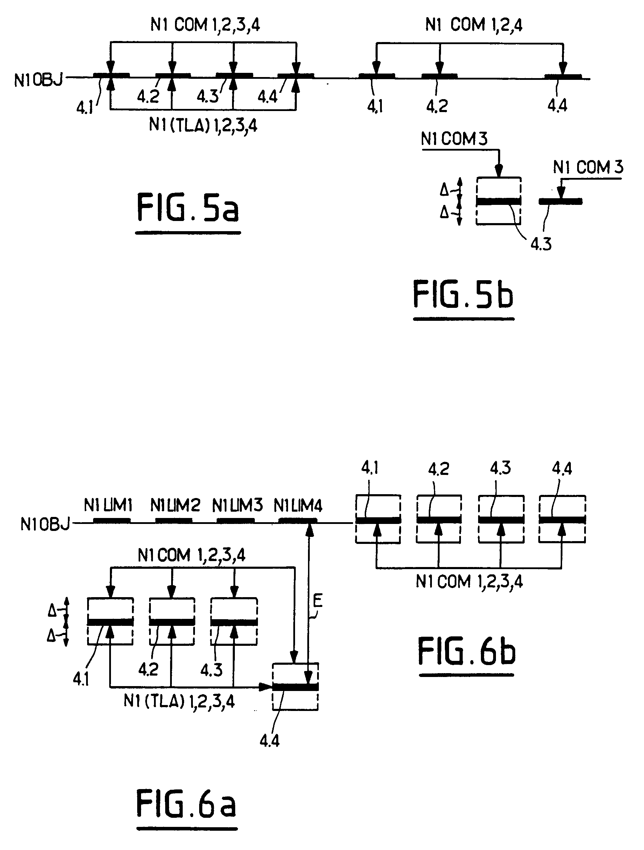

Exemple 3 (figures 5a et 5b)

Dans cet exemple, à partir de la condition initiale illustrée par la figure 5a, la manette 4.3 est désalignée dans le sens à réduire, puis elle est débrayée. Le régime commandé aux moteurs n° 1, 2 et 4 est inchangé et égal à N1 OBJ. Le régime commandé au moteur n° 3 (N1 COM3) est égal à N1(TLA)3 + $\Delta$ pendant le surpassement de l'automatisme (à gauche de la figure 5b). Après débrayage de la manette 4.3, le pilote peut relâcher son effort sur cette manette, et le régime sera égal à N1(TLA)3 (à droite de la figure 5b) et ne sera donc plus fonction de l'automatisme.

Logique 2 : choix de la plus grande valeur.

Ce choix correspond à la mise en service de protections de l'aéronef pour lesquelles il faut disposer de la poussée limite de décollage des quatre moteurs, et, cela, quel que soit le décalage initial des manettes de gaz. Le régime de décollage correspond à la mise en butée des manettes.

Exemple 4 (figures 6a et 6b)

Les manettes 4.1, 4.2, 4.3, 4.4 sont initialement désalignées (figure 6a). N1 OBJ est égal au régime maximal des moteurs correspondant à la mise en butée des manettes. L'écart E considéré par la logique est le plus grand des quatre écarts (manette 4.4), ce qui permet d'amener, grâce aux couplages par friction, les quatre manettes en butée (figure 6b), après réaction du servomoteur, et d'avoir ainsi un régime commandé aux quatre moteurs égal au régime maximal de décollage.

Le dispositif selon l'invention présente, en résumé, les avantages suivants :

1) les régimes des moteurs sont égaux malgré l'existence éventuelle d'un désalignement des manettes, tant que ce désalignement ne représente pas un écart de régime supérieur à $\Delta$. La valeur de $\Delta$ sera un compromis entre :

- le désalignement maximal toléré des manettes pour lequel le dispositif commande une poussée identique de tous les moteurs,
- la variation maximale de poussée acceptable au moment du dégagement de l'automatisme.

2) les performances ne sont pas dégradées par les imperfections des éléments mécaniques, telles que frottements, seuils et hystérésis.

3) le dispositif pilote les manettes pour que la position de celles-ci représente la poussée du moteur correspondant. En outre, tout dépassement des régimes limite est évité, tout en autorisant un surpassement par l'action volontaire du pilote.

**Revendications**

1. Dispositif pour la commande du régime d'un moteur d'aéronef, ledit aéronef comportant un dispositif de contrôle, et pouvant être manoeuvré par un pilote, du type comprenant :
   - une manette de gaz (4) reliée, d'une part, à un capteur (5) de la position de celle-ci et, d'autre part, à un servomoteur (6) pourvu d'une commande (7), par l'intermédiaire d'une transmission mécanique (8),
   - ledit dispositif de contrôle (3), permettant au pilote de choisir le mode de vol, étant relié, d'une part, à un premier calculateur (9) destiné à calculer le régime du moteur à atteindre X OBJ et, d'autre part, à des moyens de commutation (11) à deux positions, correspondant l'une à la commande manuelle et l'autre à la commande automatique, et comportant deux entrées "manuel" (11A) et "automatique" (11B),
   - ledit premier calculateur (9) recevant de plus des informations relatives à des paramètres externes au moteur, et délivrant un premier signal représentatif du régime du moteur à atteindre X OBJ, à l'entrée d'un deuxième calculateur (18), comparant ledit régime à atteindre X OBJ et le régime limite du moteur X LIM, et délivrant, à sa sortie, un deuxième signal représentatif du régime de consigne du moteur X CONS, tel que :
     1) si X OBJ < X LIM alors X CONS = X OBJ, et
     2) si X OBJ ≥ X LIM alors X CONS = X LIM,
   - ledit capteur de position (5) étant relié à l'entrée d'un troisième calculateur (22), fournissant à sa sortie un troisième signal représentatif du régime du moteur correspondant à la position de la manette X(TLA), et relié à l'entrée "manuel" (11A) desdits moyens de commutation (11),
   - lesdits deuxième et troisième signaux étant fournis aux entrées d'un comparateur (26) dont la sortie est reliée à la commande (7) du servomoteur (6), et
   - le deuxième calculateur (18) étant relié à l'entrée "automatique" (11B) desdits moyens de commutation (11),
   - la transmission mécanique (8) entre le servomoteur (6) et la manette (4) comportant un couplage surpassable par l'action volontaire de la main du pilote sur la manette (4),
   - le deuxième calculateur (18) étant relié aux moyens de commutation (11) par l'intermédiaire d'un quatrième calculateur (28) relié, de plus, au troisième calculateur (22) et fournissant, à partir des deuxième et troisième signaux, un quatrième signal représentatif du régime commandé du moteur X COM, tel que :
     a) si la relation

     $$X(TLA) - \Delta \leq X\ CONS \leq X\ (TLA) + \Delta \quad (1)$$

     (où $\Delta$ représente un écart de valeur ou tolérance déterminé) est vérifiée, alors X COM = X CONS, et
     b) si la relation (1) n'est pas vérifiée, alors

X COM = X(TLA) - Δ si X CONS < X-(TLA) - Δ , et

X COM = X(TLA) + Δ si X CONS > X-(TLA) + Δ.

2. Dispositif selon la revendication 1, caractérisé en ce que la transmission mécanique (8) entre le servomoteur (6) et la manette (4) comporte un couplage par friction (8A), associé à un embrayage électromagnétique (8B).

3. Dispositif selon la revendication 1 ou la revendication 2, caractérisé en ce qu'il comprend un calculateur auxiliaire (19) du régime limite du moteur X LIM.

4. Dispositif selon l'une quelconque des revendications 1 à 3, caractérisé en ce qu'il comprend un dispositif (13) de traitement des informations relatives à des paramètres externes et, éventuellement, internes au moteur (2), dispositif relié audit premier calculateur (9).

5. Dispositif pour la commande du régime des moteurs d'un aéronef, ledit aéronef comportant une pluralité de moteurs et un dispositif de contrôle, et pouvant être manoeuvré par un pilote, du type comprenant :

   - une pluralité de manettes de gaz (4.1, ..., 4.n), chaque manette étant associée à un moteur et reliée, d'une part, à un capteur (5.1, ..., 5.n) de la position de celle-ci et, d'autre part, à un servomoteur (6) pourvu d'une commande (7), par l'intermédiaire d'une transmission mécanique (8.1, ..., 8.n),

   - ledit dispositif de contrôle (3), permettant au pilote de choisir le mode de vol, étant relié, d'une part, à un premier calculateur (9) destiné à calculer le régime des moteurs à atteindre X OBJ et, d'autre part, pour chaque moteur, à des moyens de commutation (11.1, ..., 11.n) à deux positions, correspondant l'une à la commande manuelle et l'autre à la commande automatique, et comportant deux entrées "manuel" (11A.1, ..., 11A.n) et "automatique" (11B.1, ..., 11B.n),

   - ledit premier calculateur (9) recevant de plus des informations relatives à des paramètres externes aux moteurs, et délivrant un premier signal représentatif du régime des moteurs à atteindre X OBJ, à l'entrée de deuxièmes calculateurs (18.1, ..., 18.n), chaque deuxième calculateur étant associé à un moteur et comparant ledit régime à atteindre X OBJ et le régime limite du moteur respectif X LIM, et délivrant, à sa sortie, un deuxième signal représentatif du régime de consigne du moteur respectif X CONS, tel que :

     1) si X OBJ < X LIM alors X CONS = X OBJ, et

     2) si X OBJ ≥ X LIM alors X CONS = X LIM,

   - lesdits capteurs de position (5.1, ..., 5.n) étant reliés à l'entrée de troisièmes calculateurs (22.1, ..., 22.n), chaque troisième calculateur étant associé à un moteur et fournissant à sa sortie un troisième signal représentatif du régime du moteur respectif correspondant à la position de la manette associée audit moteur X(TLA), et étant relié à l'entrée "manuel" (11A.1, ..., 11A.n) desdits moyens de commutation (11.1, ..., 11.n),

   - lesdits deuxièmes et troisièmes signaux étant fournis aux entrées de comparateurs (26.1, ..., 26.n) associés, chacun, à un moteur et dont la sortie de chacun est reliée à la commande (7) du servomoteur (6), et

   - chaque deuxième calculateur (18.1, ..., 18.n) étant relié à l'entrée "automatique" (11B.1, ..., 11B.n) desdits moyens de commutation (11.1, ..., 11.n),

   - toutes les manettes de gaz (4.1, ..., 4.n) étant commandées par un servomoteur unique (6) pourvu d'une commande unique (7), reliée à la sortie desdits comparateurs (26.1, ..., 26.n) par l'intermédiaire d'une logique (40) permettant de choisir une valeur déterminée parmi la pluralité de valeurs issues desdits comparateurs,

   - la transmission mécanique (8.1, ..., 8.n) entre le servomoteur (6) et chaque manette (4.1, ..., 4.n) comportant un couplage surpassable par l'action volontaire de la main du pilote sur la manette (4.1, ..., 4.n),

   - chaque deuxième calculateur (18.1, ..., 18.n) étant relié aux moyens de commutation (11.1, ..., 11.n) par l'intermédiaire d'un quatrième calculateur (28.1, ..., 28.n) relié, de plus, au troisième calculateur (22.1, ..., 22.n) et fournissant, à partir des deuxième et troisième signaux, un quatrième signal représentatif du régime commandé du moteur respectif X COM tel que :

     a) si la relation

$$X(TLA) - \Delta \leq X\ CONS \leq X(TLA) + \Delta \qquad (1)$$

(où $\Delta$ représente un écart de valeur ou tolérance déterminé) est vérifiée, alors X COM = X CONS, et

b) si la relation (1) n'est pas vérifiée, alors

$X\ COM = X(TLA) - \Delta$ si $X\ CONS < X(TLA) - \Delta$, et
$X\ COM = X(TLA) + \Delta$ si $X\ CONS > X(TLA) + \Delta$.

6. Dispositif selon la revendication 5, caractérisé en ce que la logique (40) choisit la plus petite valeur ou la plus grande valeur parmi la pluralité des valeurs issues desdits comparateurs (26.1, ..., 26.n).

7. Dispositif selon la revendication 6, caractérisé en ce que des moyens de commutation (41), commandables par le dispositif de contrôle (3), permettent de passer du choix de la plus petite valeur à celui de la plus grande, et inversement.

8. Dispositif selon l'une quelconque des revendications 5 à 7, caractérisé en ce que la transmission mécanique (8.1, ..., 8.n) entre le servomoteur (6) et chaque manette (4.1, ..., 4.n) comporte un couplage par friction (8A.1, ..., 8A.n), associé à un embrayage électromagnétique (8B.1, ..., 8B.n).

9. Dispositif selon l'une quelconque des revendications 5 à 8, caractérisé en ce qu'il comprend un calculateur auxiliaire (19) du régime limite de chaque moteur.

10. Dispositif selon l'une quelconque des revendications 5 à 9, caractérisé en ce qu'il comprend un dispositif (13) de traitement des informations relatives à des paramètres externes et, éventuellement, internes à chaque moteur (2.1, ..., 2.n), dispositif relié audit premier calculateur (9).

**Claims**

1. Device for controlling the speed of an aircraft engine, said aircraft comprising a control device, and able to be manipulated by a pilot, of the type comprising:
   - a throttle lever (4) linked, on the one hand, to a sensor (5) of the position of the latter and, on the other hand, to a servomotor (6) provided with a control (7), by means of a mechanical transmission (8),
   - said control device (3), allowing the pilot to choose the flight mode, being linked, on the one hand, to a first computer (9) intended to calculate the speed of the engine to be reached X OBJ and, on the other hand, to switchover means (11) with two positions, one corresponding to manual control and the other to automatic control, and comprising two inputs, "manual" (11A) and "automatic" (11B),
   - said first computer (9) further receiving information relating to parameters external to the engine, and delivering a first signal which is representative of the speed of the engine to be reached x OBJ, to the input of a second computer (18), comparing said speed to be reached X OBJ and the limit speed of the engine X LIM, and delivering, at its output, a second signal which is representative of the datum speed of the engine X CONS, such that:
     1) if $X\ OBJ < X\ LIM$ then $X\ CONS = X\ OBJ$, and
     2) if $X\ OBJ \geq X\ LIM$ then $X\ CONS = X\ LIM$,
   - said position sensor (5) being linked to the input of a third computer (22), supplying at its output a third signal which is representative of the speed of the engine corresponding to the position of the throttle lever X(TLA), and linked to the "manual" input (11A) of said switchover means (11),
   - said second and third signals being supplied to the inputs of a comparator (26) whose output is linked to the control (7) of the servomotor (6), and
   - the second computer (18) being linked to the "automatic" (11B) input of said switchover means (11),

   the mechanical transmission (8) between the servomotor (6) and the throttle lever (4) comprising a coupling which can be overridden by the deliberate action of the hand of the pilot on the throttle lever (4), the second computer (18) being linked to the switchover means (11) by means of a fourth computer (28) linked, furthermore, to the third computer (22) and supplying, from the second and third signals, a fourth signal which is representative of the demanded speed of the engine X COM, such that:
   a) if the relation

$$X(TLA) - \Delta \leq X\ CONS \leq X\ (TLA) + \Delta \quad - (1)$$

(where $\Delta$ represents a defined value offset or tolerance) is satisfied, then $X\ CON = X\ CONS$, and

b) if relation (1) is not satisfied, then

$$X\ COM = X(TLA) - \Delta \text{ if } X\ CONS < X(TLA) - \Delta, \text{ and}$$
$$X\ COM = X(TLA) + \Delta \text{ if } X\ CONS > X(TLA) + \Delta.$$

2. Device according to Claim 1, characterized in that the mechanical transmission (8) between the servomotor (6) and the throttle lever (4) comprises a friction coupling (8A), associated with an electromagnetic clutch (8B).

3. Device according to Claim 1 or Claim 2, characterized in that it comprises an auxiliary computer (19) for the limit speed of the engine $X\ LIM$.

4. Device according to any one of Claims 1 to 3, characterized in that it comprises a device (13) for processing information relating to parameters external and, possibly, internal to the engine (2), the device being linked to said first computer (9).

5. Device for controlling the speed of the engines of an aircraft, said aircraft comprising a plurality of engines and a control device, and able to be manipulated by a pilot, of the type comprising:

- a plurality of throttle levers (4.1, ..., 4.n), each throttle lever being associated with an engine and linked, on the one hand, to a sensor (5.1, ..., 5.n) of the position of the latter and, on the other hand, to a servomotor (6) provided with a control (7), by means of a mechanical transmission (8.1, ..., 8.n),
- said control device (3), allowing the pilot to choose the flight mode, being linked, on the one hand, to a first computer (9) intended to calculate the speed of the engines to be reached $X\ OBJ$ and, on the other hand, for each engine, to switchover means (11.1, ..., 11.n) with two positions, one corresponding to manual control and the other to automatic control, and comprising two inputs, "manual" (11A.1, ..., 11A.n) and "automatic" (11B.1, ..., 11B.n),
- said first computer (9) further receiving information relating to parameters external to the engines, and delivering a first signal which is representative of the speed of the engines to be reached $X\ OBJ$ to the input of second computers (18.1, ..., 18.n), each second computer being associated with an engine and comparing said speed to be reached $X\ OBJ$ and the limit speed of the respective engine $X\ LIM$, and delivering, at its output, a second signal which is representative of the datum speed of the respective engine $X\ CONS$, such that:

1) if $X\ OBJ < X\ LIM$ then $X\ CONS = X\ OBJ$, and

2) if $X\ OBJ \geq X\ LIM$ then $X\ CONS = X\ LIM$,

- said position sensors (5.1, ..., 5.n) being linked to the input of third computers (22.1, ..., 22.n), each third computer being associated with an engine and supplying at its output a third signal which is representative of the speed of the respective engine corresponding to the position of the throttle lever associated with said engine $X(TLA)$, and being linked to the "manual" input (11A.1, . .., 11A.n) of said switchover means (11.1, ..., 11.n),
- said second and third signals being supplied to the inputs of comparators (26.1, ..., 26.n) each associated with an engine and each of whose outputs is linked to the control (7) of the servomotor (6), and
- each second computer (18.1, ..., 18.n) being linked to the "automatic" input (11B.1, ..., 11B.n) of said switchover means (11.1, ..., 11.n),

all the throttle levers (4.1, ..., 4.n) being controlled by a single servomotor (6) provided with a single control (7), linked to the output of said comparators (26.1, ..., 26.n) by means of logic (40) making it possible to choose a defined value from the plurality of values derived from said comparators,

the mechanical transmission (8.1, ..., 8.n) between the servomotor (6) and each throttle lever (4.1, ..., 4.n) comprising a coupling which can be overridden by the deliberate action of the hand of the pilot on the throttle lever (4.1, ..., 4.n),

each second computer (18.1, ..., 18.n) being linked to the switchover means (11.1, ..., 11.n) by means of a fourth computer (28.1, ..., 28.n) linked, furthermore, to the third computer (22.1, ..., 22.n) and supplying, from the second and third signals, a fourth signal which is representative of the demanded speed of the respective engine $X\ COM$ such that:

a) if the relation

$$X(TLA) - \Delta \leq X\ CONS \leq X\ (TLA) + \Delta \qquad (1)$$

(where $\Delta$ represents a defined value offset or tolerance) is satisfied, then $X\ COM = X\ CONS$, and
b) if relation (1) is not satisfied, then

$$X\ COM = X(TLA) - \Delta \text{ if } X\ CONS < X(TLA) - \Delta, \text{ and}$$
$$X\ COM = X(TLA) + \Delta \text{ if } X\ CONS > X(TLA) + \Delta.$$

6. Device according to Claim 5, characterized in that the logic (40) chooses the smallest value or the largest value from the plurality of values derived from said comparators (26.1, ..., 26.n).

7. Device according to Claim 6, characterized in that the switchover means (41), which can be controlled by the control device (3), make it possible to pass from the choice of the smallest value to that of the largest, and conversely.

8. Device according to any one of Claims 5 to 7, characterized in that the mechanical transmission (8.1, ..., 8.n) between the servomotor (6) and each throttle lever (4.1, ..., 4.n) comprises a friction coupling (8A.1, ..., 8A.n), associated with an electromagnetic clutch (8B.1, ..., 8B.n).

9. Device according to any one of Claims 5 to 8, characterized in that it comprises an auxiliary computer (19) for the limit speed of each engine.

10. Device according to any one of Claims 5 to 9, characterized in that it comprises a device (13) for processing information relating to parameters external and, possibly, internal to each engine (2.1, ..., 2.n), the device being linked to said first computer (9).

**Patentansprüche**

1. Vorrichtung zur Drehzahlsteuerung des Triebwerks eines Luftfahrzeugs, wobei das Luftfahrzeug eine Kontrollvorrichtung hat und von einem Piloten gesteuert werden kann, derart, daß sie umfaßt:
   - einen Gashebel (4), der einerseits mit einem Geber (5) seiner Stellung und andererseits über eine mechanische Kraftübertragung (8) mit einem Servomotor (6) mit einer Steuerung (7) verbunden ist, wobei

   - die Kontrollvorrichtung (3), durch die der Pilot den Flugmodus wählen kann, einerseits mit einem ersten Rechner (9) zur Berechnung der zu erzielenden Triebwerksdrehzahl X OBJ und andererseits mit Schaltmitteln (11) verbunden ist, die zwei Schaltstellungen entsprechend für die Steuerung von Hand und für die automatische Steuerung und zwei Eingänge "Hand" (11A) und "Automatik" (11B) haben,
   - der erste Rechner (9) außerdem Informationen über triebwerksexterne Parameter erhält und ein erstes Signal, das für die zu erzielende Triebwerksdrehzahl X OBJ repräsentativ ist, an den Eingang eines zweiten Rechners (18) gibt, der die zu erzielende Drehzahl X OBJ mit der Grenzdrehzahl des Triebwerks X LIM vergleicht und an seinem Ausgang ein zweites Signal abgibt, das für die Solldrehzahl des Triebwerks X CONS repräsentativ ist, so daß
     1) wenn X OBJ < X LIM, X CONS = X OBJ und
     2) wenn X OBJ ≥ X LIM, X CONS = X LIM,
   - der Stellungsgeber (5) mit dem Eingang eines dritten Rechners (22) verbunden ist, der an seinem Ausgang ein drittes Signal abgibt, das für die Drehzahl des Triebwerks entsprechend der Gashebelstellung X(TLA) repräsentativ ist, und mit dem Eingang "Hand" (11A) der Schaltmittel (11) verbunden ist,
   - das zweite und dritte Signal an die Eingänge eines Komparators (26) gegeben werden, dessen Ausgang mit der Steuerung (7) des Servomotors (6) verbunden ist, und
   - der zweite Rechner (18) mit dem Eingang "Automatik" (11B) der Schaltmittel (11) verbunden ist,
   - die mechanische Kraftübertragung (8) zwischen dem Servomotor (6) und dem Gashebel (4) durch eine Kupplung erfolgt, die bei Betätigung des Gashebels durch den Piloten von Hand überfahren werden kann,
   - der zweite Rechner (18) mit den Schaltmitteln (11) über einen vierten Rechner (28) verbunden ist, der außerdem mit dem dritten Rechner (22) verbunden ist und ausgehend vom zweiten und dritten Signal ein viertes Signal abgibt, das für die gesteuerte Triebwerksdrehzahl X COM repräsentativ ist, so daß:

a) wenn die Beziehung

$$X(TLA) - \Delta \leq X\ CONS \leq X(TLA) + \Delta \quad (1)$$

(wobei $\Delta$ eine bestimmte Abweichung oder Toleranz darstellt) erfüllt ist, X COM = X CONS und
b) wenn die Beziehung (1) nicht erfüllt ist,

X COM = X(TLA) - $\Delta$, wenn X CONS < X(TLA) - $\Delta$, und
X COM = X(TLA) + $\Delta$, wenn X CONS > X(TLA) + $\Delta$.

2. Vorrichtung nach Anspruch 1,
dadurch gekennzeichnet, daß die mechanische Kraftübertragung (8) zwischen dem Servomotor (6) und dem Gashebel (4) aus einer Reibkupplung (8A) besteht, die einer elektromagnetischen Kupplung (8B) zugeordnet ist.

3. Vorrichtung nach Anspruch 1 oder Anspruch 2,
dadurch gekennzeichnet, daß sie einen Hilfsrechner (19) für die Grenzdrehzahl des Triebwerks X LIM umfaßt.

4. Vorrichtung nach einem der Ansprüche 1 bis 3,
dadurch gekennzeichnet, daß sie eine Vorrichtung (13) zur Informationsverarbeitung der externen und eventuell internen Parameter des Triebwerks (2) hat, wobei die Vorrichtung mit dem ersten Rechner (9) verbunden ist.

5. Vorrichtung zur Drehzahlsteuerung der Triebwerke eines Luftfahrzeugs, wobei das Luftfahrzeug eine Vielzahl von Triebwerken und eine Kontrollvorrichtung hat und von einem Piloten gesteuert werden kann, derart, daß sie umfaßt:
   - eine Vielzahl von Gashebeln (4.1, ..., 4.n), wobei jeder Gashebel einem Triebwerk zugeordnet ist und einerseits mit einem Stellungsgeber (5.1, ..., 5.n) und andererseits über eine mechanische Kraftübertragung (8.1, ..., 8.n) mit einem Servomotor (6) mit Steuerung (7) verbunden ist, wobei
   - die Kontrollvorrichtung (3), durch die der Pilot den Flugmodus wählen kann, einerseits mit einem ersten Rechner (9) zur Berechnung der zur erzielenden Drehzahl der Triebwerke X OBJ und andererseits für jedes Triebwerk mit Schaltmitteln (11.1, ..., 11.n) verbunden ist, die zwei Schaltstellungen entsprechend für die Handsteuerung und die automatische Steuerung und zwei Eingänge "Hand" (11A.1, ..., 11A.n) und "Automatik" (11B.1, ..., 11B.n) haben,
   - der erste Rechner (9) außerdem Informationen über triebwerksexterne Parameter erhält und ein erstes Signal, das für die zu erzielende Triebwerksdrehzahl X OBJ repräsentativ ist, an den Eingang zweiter Rechner (18.1, ..., 18.n) gibt, wobei jeder zweite Rechner einem Triebwerk zugeordnet ist und die zu erzielende Drehzahl X OBJ mit der Grenzdrehzahl des entsprechenden Triebwerks X LIM vergleicht und an seinem Ausgang ein zweites Signal abgibt, das für die Solldrehzahl des entsprechenden Triebwerks X CONS repräsentativ ist, so daß
   1) wenn X OBJ < X LIM, X CONS = X OBJ und
   2) wenn X OBJ $\geq$ X LIM, X CONS = X LIM,
   - die Stellungsgeber (5.1, ..., 5.n) mit dem Eingang dritter Rechner (22.1, ..., 22.n) verbunden sind, wobei jeder dritte Rechner einem Triebwerk zugeordnet ist und an seinem Ausgang ein drittes Signal abgibt, das für die Drehzahl des jeweiligen Triebwerks entsprechend der Stellung des dem Triebwerk zugeordneten Gashebels X(TLA) repräsentativ ist, und mit dem Eingang "Hand" (11A.1,..., 11A.n) der Schaltmittel (11.1, ..., 11.n) verbunden ist,
   - das zweite und dritte Signal an die Eingänge von Komparatoren (26.1, ..., 26.n) gegeben werden, die jeweils einem Triebwerk zugeordnet sind und deren Ausgang jeweils mit der Steuerung (7) des Servomotors (6) verbunden ist, und
   - jeder zweite Rechner (18.1, ..., 18.n) mit dem Eingang "Automatik" (11B.1, ..., 11B.n) der Schaltmittel (11.1, ..., 11.n) verbunden ist,
   - alle Gashebel (4.1, ..., 4.n) von einem einzigen Servomotor (6) mit einer einzigen Steuerung (7) gesteuert werden, die mit dem Ausgang der Komparatoren (26.1, ..., 26.n) über eine Logik (40) verbunden ist, durch die aus der Vielzahl der von den Komparatoren erhaltenen Werte ein bestimmter Wert ausgewählt werden kann,
   - die mechanische Kraftübertragung (8.1, ..., 8.n) zwischen dem Servomotor (6) und jedem Gashebel (4.1, ..., 4.n) durch eine Kupplung erfolgt, die bei Betätigung des Gashebels (4.1, ..., 4.n) durch den Piloten von Hand überfahren werden kann,

- jeder zweite Rechner (18.1, ..., 18.n) mit den Schaltmitteln (11.1, ..., 11.n) über einen vierten Rechner (28.1, ..., 28.n) verbunden ist, der außerdem mit dem dritten Rechner (22.1, ..., 22.n) verbunden ist und ausgehend vom zweiten und dritten Signal ein viertes Signal abgibt, das für die gesteuerte Drehzahl des entsprechenden Triebwerks X COM repräsentativ ist, so daß:

a) wenn die Beziehung

$$X(TLA) - \Delta \leq X \; CONS \leq X(TLA) + \Delta \quad (1)$$

(wobei $\Delta$ eine bestimmte Abweichung oder Toleranz darstellt) erfüllt ist, X COM = X CONS und

b) wenn die Beziehung (1) nicht erfüllt ist,

$X \; COM = X(TLA) - \Delta$, wenn $X \; CONS < X(TLA) - \Delta$, und
$X \; COM = X(TLA) + \Delta$, wenn $X \; CONS > X(TLA) + \Delta$.

**6.** Vorrichtung nach Anspruch 5,
dadurch gekennzeichnet, daß die Logik (40) aus der Vielzahl der Werte der Komparatoren (26.1, ..., 26.n) den kleinsten Wert oder den größten Wert auswählt.

**7.** Vorrichtung nach Anspruch 6,
dadurch gekennzeichnet, daß durch Schaltmittel (41), die von der Kontrollvorrichtung (3) gesteuert werden können, vom kleinsten Wert auf den größten Wert und umgekehrt geschaltet werden kann.

**8.** Vorrichtung nach einem der Ansprüche 5 bis 7,
dadurch gekennzeichnet, daß die mechanische Kraftübertragung (8.1, ..., 8.n) zwischen dem Servomotor (6) und jedem Gashebel (4.1, ..., 4.n) aus einer Reibkupplung (8A.1, ..., 8A.n) besteht, die einer elektromagnetischen Kupplung (8B.1, ..., 8B.n) zugeordnet ist.

**9.** Vorrichtung nach einem der Ansprüche 5 bis 8,
dadurch gekennzeichnet, daß sie einen Hilfsrechner (19) für die Grenzdrehzahl jedes Triebwerks hat.

**10.** Vorrichtung nach einem der Ansprüche 5 bis 9,
dadurch gekennzeichnet, daß sie eine Vorrichtung (13) zur Informationsverarbeitung der externen und eventuell internen Parameter jedes Triebwerks (2.1, ..., 2.n) hat, wobei die Vorrichtung mit dem ersten Rechner (9) verbunden ist.

# FIG.1

FIG.2

FIG. 3b

FIG. 3a

FIG. 4b

FIG. 4a

FIG.5a

FIG.5b

FIG.6b

FIG.6a